# EUROPÄISCHE PATENTSCHRIFT

(11) **EP 2 136 899 B1**
(45) Veröffentlichungstag und Bekanntmachung des Hinweises auf die Patenterteilung: **07.03.2012**
(21) Anmeldenummer: 08701439.5
(22) Anmeldetag: 11.01.2008
(51) Int. Cl.: B01D 27/14, B01D 36/00

(54) **KRAFTSTOFFFILTER**
FUEL FILTER
FILTRE À CARBURANT

(30) Priorität: 12.01.2007 DE 202007000746 U
(43) Veröffentlichungstag der Anmeldung: 30.12.2009
(73) Patentinhaber: Mann + Hummel GmbH, 71638 Ludwigsburg (DE)
(72) Erfinder: WOLF, Michael, 66539 Neunkirchen (DE); CROISSANT, Horst, 76879 Hochstadt (DE); JOKSCHAS, Günter, 71540 Murrhardt (DE); LORENTE, Sonia, Cuarte de Huerva Zaragoza (ES)
(86) Internationale Anmeldenummer: PCT/EP2008/050295
(87) Internationale Veröffentlichungsnummer: WO 2008/084098

(56) Entgegenhaltungen:
- WO-A-2007/010037
- DE-C1- 19 835 525
- DE-U1- 20 116 185

## Beschreibung

### Technisches Gebiet

Die Erfindung betrifft einen Kraftstofffilter nach dem Oberbegriff des Anspruches 1.

### Stand der Technik

Es sind Kraftstofffilter bekannt, welche über ein Gehäuse und ein Filtermedium verfügen. Das Gehäuse verfügt über einen Einlass und einen Auslass, wobei das Filtermedium zwischen dem Einlass und dem Auslass angeordnet ist. Bei Kraftstafffiltern, welche im Saugbetrieb, also mit einer in Strömungsrichtung nach dem Kraftstofffilter angeordneten Pumpe betrieben werden, kommt es auf der Rohseite des Filtermediums zum Ausgasen des Kraftstoffs. Die Gasblasen sammeln sich auf der Rohseite in einem oberen Bereich des Kraftstofffilters innerhalb des Gehäuses. Zur Vermeidung, dass sich immer mehr Gase im Inneren des Gehäuses befinden, sind Entlüftungsbohrungen vorgesehen, welche die Rohseite mit der dem Filtermedium nachgeordneten Reinseite verbinden. Die auf der Rohseite enthaltenen Gase können somit auf die Reinseite übertreten. Nachteilig bei dieser Ausführung ist jedoch, dass durch die Entlüftungsbohrungen auch Schmutzpartikel von der Rohseite auf die Reinseite übertreten können und nachfolgende Bauteile beschädigen können.
Ein gattungsgemäßer Kraftstofffilter mit einem rohseitigem Entlüftungsventil ist aus der DE 201 16 185 U1 bekannt. Der über das Entlüftungsventil der Reinseite zugeführte Gasstrom passiert einen Grobfilter, welcher verhindert, dass ungefilterter Kraftstoff von der Rohseite des Kraftstofffilters auf dessen Reinseite gelangen kann, falls das Entlüftungsventil bei anströmenden Kraftstoff nicht schnell genug schließt.
Die DE 198 35 525 C1 beschreibt einen Filter für Heizöl mit einer Entlüftungsleitung, welche mit einem zusätzlichen Filtereinsatz versehen ist, durch welches die Luft durchströmen muss, die über die Entlüftungsleitung von der Rohseite des Heizölfilters auf dessen Reinseite strömt.
Schließlich ist der nachveröffentlichten WO 2007/010037 A1 ein Kraftstofffilter zu entnehmen, welcher eine Entlüftungseinheit aufweist, die einen mit einem zusätzlichen Filterkörper abdeckten Strömungskanal umfasst.

Aufgabe der Erfindung ist es, einen Kraftstofffilter zu schaffen, welcher im Saugbetrieb betreibbar ist und eine zu große Gasansammlung im Gehäuse verhindert, wobei gleichzeitig mit erhöhter Sicherheit zu verhindern ist, dass grobe Schmutzpartikel zu nachfolgenden Bauteilen gelangen können. Diese Aufgabe wird durch die Merkmale des Anspruchs 1 gelöst.

### Offenbarung der Erfindung

Der erfindungsgemäße Kraftstofffilter verfügt über ein Gehäuse mit einem Einlass und einem Auslass. Zur Reinigung des Kraftstoffs ist ein Filtermedium vorgesehen, welches enthaltene Verunreinigungen im Kraftstoff zurückhält. Hierbei ist das Filtermedium im Wesentlichen undurchlässig für im Kraftstoff enthaltene Gase und gegebenenfalls auch für im Kraftstoff enthaltenes Wasser. Derartige Filtermedien können aus einem beliebigen Material bestehen. Vorzugsweise sind ein- oder mehrlagige zellulosehaltige Filtermedien oder synthetische Vliese verwendbar. Das Gehäuse kann ein- oder mehrteilig ausgeführt sein und aus Metall oder Kunststoff bestehen. In dem Gehäuse ist zwischen dem Einlass und dem Filtermedium eine Rohseite für den zu reinigenden Kraftstoff gebildet. Zwischen dem Auslass und dem Filtermedium ist eine Reinseite angeordnet, welche den gereinigten Kraftstoff enthält. Zwischen der Roh- und der Reinseite ist eine Entlüftungseinrichtung vorgesehen, welche geeignet ist, Gase von der Rohseite auf die Reinseite zu transportieren. Die Entlüftungseinrichtung kann z.B. in Form von kleinen Bohrungen oder Schlitzen ausgeführt sein, welche in einem oberen Bereich des Filters angeordnet sind. Die Entlüftungseinrichtung kann auch in einem oberen Bereich in das Filtermedium integriert sein. Bei anderen Ausführungen kann ein gesondertes Bauteil vorgesehen sein, welches sowohl mit der Rohseite als auch mit der Reinseite kommunizierend verbunden ist. Die Entlüftungseinrichtung verfügt über Öffnungen, welche größer als die Poren des Filtermediums sind. Somit können Gasblasen, welche von dem Filtermedium am Durchtritt auf die Rohseite gehindert werden, durch die Entlüftungseinrichtung auf die Reinseite gelangen. Zwischen dem Auslass und der Entlüftungseinrichtung ist ein zusätzliches Feinmedium angeordnet, welches zur Abscheidung von auf der Reinseite enthaltenen Verunreinigungen geeignet ist. Hierbei ist das Feinmedium derart ausgestaltet, dass Verunreinigungen, welche zu Beschädigungen nachfolgender Bauteile führen könnten durch das Feinmedium zurückgehalten werden. Das Feinmedium ist derart angeordnet, dass es von gereinigtem Kraftstoff und durch die Entlüftungseinrichtung getretenen Gasblasen durchströmt wird. Die im Kraftstoff enthaltenen Gasblasen können durch das Feinmedium hindurch treten. Das Feinmedium kann z.B. als Sieb mit einer Maschenweite von ca. 50 - 100 µm ausgestattet sein. Vorzugsweise beträgt die Siebfeinheit ca. 60 µm.

Gemäß einer weiteren Ausgestaltung der Erfindung verfügt die Entlüftungseinrichtung über einen Grobabscheider. Ein derartiger Grobabscheider kann z.B. ebenfalls als Sieb ausgebildet werden, wobei die Feinheit des Grobabscheiders > 100 µm beträgt. Somit werden sehr grobe Partikel daran gehindert von der Rohseite auf die Reinseite zu treten.

Bei einer vorteilhaften Ausgestaltung der Erfindung ist die Eritlüftungseinrichtung in einen Filtermediumhalter integriert. Der Filtermediumhalter ist einerseits dichtend mit dem Filtermedium durch z.B. kleben oder schweißen verbunden. Weiterhin ist der Filtermediumhalter dichtend mit dem Gehäuse verbunden. Die Verbindung kann direkt mit einem Gehäuseteil erfolgen oder über andere Funktionsteile erfolgen. Bei dieser Anordnung befindet sich die Entlüftungseinrichtung oberhalb des Filtermediums, wodurch die Entlüftungseinrichtung im Gassammelbereich des Gehäuses angeordnet ist und eine zuverlässige Entlüftung der Rohseite sicherstellt.

Bei vorteilhaften Ausführungen ist das Filtermedium als Siebgewebe ausgeführt. Hierbei können einzelne Fasern miteinander verwebt sein. Bei anderen Ausführungen kann das Feinmedium auch in einem Urformprozess hergestellt sein und über gleichmäßige Poren bzw. Öffnungen verfügen. Diese Öffnungen liegen in einem vorzugsweisen Bereich von ca. 50 - 100 µm.

Gemäß einer Weiterbildung der Erfindung ist das Feinmedium mit einem Stützkäfig verbunden, wobei der Stützkäfig mit dem Gehäuse verbindbar ist. Durch die Verwendung eines kraftstoffdurchlässigen Stützkäfigs wird eine zu große mechanische Beanspruchung des Feinmediums verhindert, welche zu Beschädigungen führen kann. Der Stützkäfig selbst verfügt über derart große Öffnungen, welche keinerlei Abscheideaufgaben erfüllen können und somit den Durchflusswiderstand nicht negativ beeinflussen.

Gemäß einer vorteilhaften Ausgestaltung der Erfindung ist der Stützkäfig aus einem thermoplastischen Kunststoff gebildet, welcher unlösbar mit dem Feinmedium verbunden ist. Die unlösbare Verbindung kann z.B. durch Kleben erzeugt sein. Ein Stützkäfig aus thermoplastischem Material kann einfach und kostengünstig in einem Urformprozess hergestellt sein.

Bei einer vorteilhaften Weiterbildung der ist der Stützkäfig mit dem Feinmedium verschweißt, wodurch sich das Feinmedium nicht unkontrolliert von dem Stützkäfig lösen kann und ohne zusätzlichen Materialeinsatz eine zuverlässige Verbindung bildet.

Bei einer alternativen Ausgestaltung kann der Stützkäfig auch direkt auf das Feinmedium aufgespritzt werden. Hierzu wird das Feinmedium in die Spritzgussmaschine eingelegt und der Stützkäfig direkt auf dem Feinmedium gebildet. Die Schmelze des Stützkäfigs dringt in die Poren des Feinmediums ein und bildet so nach dem Erstarren eine unlösbare, feste Verbindung mit den Stützgeometrien. Das Feinmedium mit dem Stützkäfig kann so in nur einem Arbeitsgang hergestellt werden.

Gemäß einer vorteilhaften Ausgestaltung der Erfindung verfügt das Gehäuse über einen Topf und einen Deckel, wobei der Topf über einen Dichtungshalter mit dem Deckel verbunden, insbesondere verbördelt ist. Gemäß dieser Ausführung ist der Kraftstofffilter als Wechselfilter ausgeführt, welcher als eine Einheit einfach austauschbar ist. Der Topf kann als Tiefziehteil aus einem dünnen Metallblech hergestellt werden. Der Deckel ist als stabile Metallplatte mit Öffnungen ausgestaltet, wobei der Deckel mittels eines Dichtungshalters mit dem Topf verbördelt wird. Hierbei ist der Dichtungshalter ebenfalls aus einem dünnen Metallblech gebildet.

### Kurze Beschreibung der Zeichnungen

Weitere Einzelheiten der Erfindung werden nachfolgend anhand des Ausführungsbeispiels beschrieben. Hierbei zeigt:

Fig. 1 einen Kraftstofffilter im Halbschnitt und

Fig. 2 einen Ausschnitt X gemäß Figur 1.

### Ausführungsform(en) der Erfindung

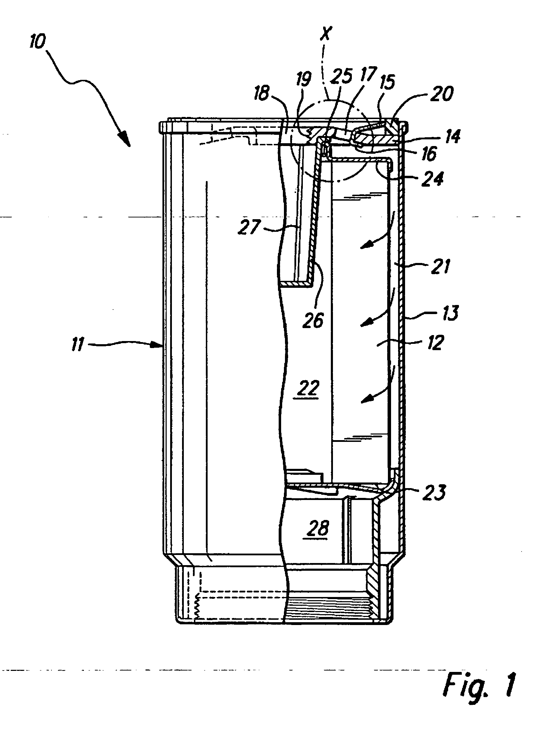

In Figur 1 ist ein Kraftstofffilter 10 im Halbschnitt dargestellt. Der Kraftstofffilter 10 verfügt über ein Gehäuse 11 und ein Filtermedium 12. Das Gehäuse 11 wird durch einen Topf 13 und einen Deckel 14 gebildet. Der Deckel 14 ist mittels eines Dichtungshalters 15 mit dem Topf 13 verbunden. Diese Verbindung ist durch eine Verbördelung des Dichtungshalters 15 mit dem Topf 13 gebildet. Zur Fixierung des Deckels 14 greifen Laschen 16 des Dichtungshalters 15 in Einlassöffnugen 17 des Deckels 14 ein. Der Deckel 14 verfügt über mehrere, verteilt angeordnete Einlassöffnungen 17, durch welche der zu reinigende Kraftstoff in das Gehäuse 11 einströmen kann. Weiterhin verfügt der Deckel 14 über eine zentral angeordnete Auslassöffnung 18. Die Auslassöffnung 18 verfügt über ein Gewinde 19, mit welchem der Kraftstofffilter 10 an einen Flansch (nicht dargestellt) anschraubbar ist. Zur dichtenden Befestigung des Kraftstofffilters 10 an dem Flansch ist eine Dichtung 20 vorgesehen, welche zwischen dem Flansch und dem Gehäuse 11 des Kraftstofffilters 10 verpresst wird.

Im Innern des Gehäuses 11 ist das Filtermedium 12 derart angeordnet, dass zwischen den Einlassöffnungen 17 und dem Filtermedium 12 ein Rohraum 21 gebildet ist. Im Inneren des sternförmig gefalteten und ringförmig geschlossenen Filtermediums 12 ist ein Reinraum 22 angeordnet. Zur Trennung des Rohraums 21 von dem Reinraum 22 ist das Filtermedium 12 an seiner unteren Stirnseite mit einer Endscheibe 23 dichtend verbunden. Hierbei ist die Endscheibe 23 als geschlossenes Bauteil ausgeführt. Im oberen Stirnseitenbereich des Filtermediums 12 ist das Filtermedium mit einem Filtermediumhalter 24 dichtend verbunden. Diese Verbindung ist mit einem Kleber einfach und kostengünstig herstellbar. Der Filtermediumhalter 24 verfügt über Entlüftungsbohrungen 25, welche in dem oberhalb des Filtermediums 12 angeordneten Bereich des Filtermediumshalters 24 angeordnet sind. Zwischen den Entlüftungsbohrungen 25 und der Auslassöffnung 18 ist ein Feinmedium 26 angeordnet. Das Feinmedium 26 ist als Kunststoffmembran mit einer Porengröße von ca. 60 µm ausgestaltet. Auf der Abströmseite des Feinmediums 26 ist ein Stützkäfig 27 angeordnet, welcher zur mechanischen Stabilisierung des Feinmediums 26 dient. Hierzu verfügt der Stützkäfig 27 über Längsrippen. Alternativ oder zusätzlich zu den Längsrippen können auch Querrippen vorgesehen sein.

Der Kraftstofffilter 10 gemäß dieser Ausgestaltung ist als Kraftstoffvorfilter ausgebildet, wobei im Kraftstoff enthaltenes Wasser durch das Filtermedium 12 abgeschieden wird. Das Wasser sinkt in dem Kraftstofffilter 10 nach unten und sammelt sich in einem Wassersammelraum 28, von wo aus es aus dem Kraftstofffilter 10 ausgetragen werden kann.

Der zu reinigende Kraftstoff strömt durch die Einlassöffnungen 17 in den Rohraum 21 des Kraftstofffilters 10 ein. Die im Kraftstoff enthaltenen Verunreinigungen wie z.B. Partikel, Wassertröpfchen oder Gasblasen werden von dem Filtermedium 12 zurückgehalten und können somit nicht in den Reinraum 22 gelangen. Die abgeschiedenen Wassertröpfchen sammeln sich im Wassersammelraum 28, welcher unterhalb des Filtermediums 12 angeordnet ist. Die Gasblasen steigen nach oben und sammeln sich im oberen Bereich oberhalb des Filtermediums 12. Der Kraftstoff tritt in Pfeilrichtung durch das Filtermedium 12 hindurch und gelangt so in den Reinraum 22. Die Gasblasen, welche sich im oberen Bereich des Kraftstofffilters 10 gesammelt haben treten durch Entlüftungsbohrungen 25 von dem Rohraum 21 zu dem Reinraum 22 über. Der gereinigte Kraftstoff und die Gasblasen durchdringen das Feinmedium 26 und können den Kraftstofffilter 10 durch die Auslassöffnung 18 verlassen.

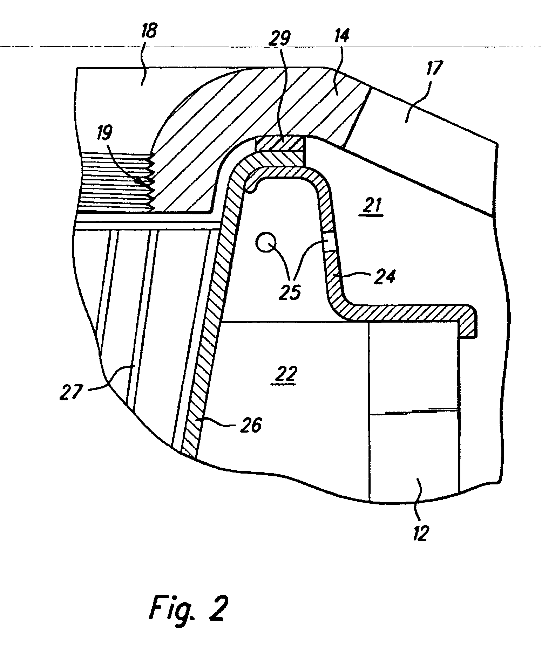

In Figur 2 ist ein Ausschnitt X in vergrößerter Darstellung abgebildet. Gleiche Bauteile sind mit gleichen Bezugszeichen versehen. Der Filtermediumhalter 24 schließt mit seinem oberen Bereich dichtend an das Feinmedium 26 an. Das Feinmedium 26 wird mit einer Flachdichtung 29 dichtend an den Deckel 14 angedrückt, wodurch Leckagen verhindert werden.

## Patentansprüche

1. Kraftstofffilter, insbesondere für Dieselkraftstoffe, aufweisend ein Gehäuse (11) und ein im Wesentlichen für im Kraftstoff enthaltene Gase undurchlässiges Filtermedium (12), wobei das Gehäuse (11) über zumindest einen Einlass (17) und einen Auslass (18) verfügt, wobei zwischen dem Einlass (17) und dem Filtermedium (12) eine Rohseite (21) und zwischen dem Auslass (18) und dem Filtermedium (12) eine Reinseite (22) gebildet ist, wobei zwischen der Rohseite (21) und der Reinseite (22) eine Entlüftungseinrichtung (25) vorgesehen ist, welche geeignet ist, Gase von der Rohseite (21) auf die Reinseite (22) zu transportieren, **dadurch gekennzeichnet, dass** zwischen dem Auslass (18) und der Entlüftungseinrichtung (25) ein zusätzliches Feinmedium (26), durch welches im Kraftstoff enthaltene Gasblasen hindurchtreten können und welches zur Abscheidung von auf der Reinseite (22) enthaltenen Verunreinigungen geeignet ist, derart angeordnet ist, dass es von gereinigtem Kraftstoff und durch die Entlüftungseinrichtung getretenen Gasblasen durchströmt wird.

2. Kraftstofffilter nach Anspruch 1, **dadurch gekennzeichnet, dass** die Entlüftungseinrichtung (25) über einen Grobabscheider verfügt.

3. Kraftstofffilter nach Anspruch 1 oder 2, **dadurch gekennzeichnet, dass** die Entlüftungseinrichtung (25) in einen Filtermediumhalter (24) integriert ist.

4. Kraftstofffilter nach einem der vorangehenden Ansprüche, **dadurch gekennzeichnet, dass** das Feinmedium (26) als Siebgewebe ausgeführt ist.

5. Kraftstofffilter nach einem der vorangehenden Ansprüche, **dadurch gekennzeichnet, dass** das Feinmedium (26) mit einem Stützkäfig (27) verbunden ist, wobei der Stützkäfig (27) mit dem Gehäuse (11) verbindbar ist.

6. Kraftstofffilter nach Anspruch 5, **dadurch gekennzeichnet, dass** der Stützkäfig (27) aus einem thermoplastischen Kunststoff gebildet und mit dem Feinmedium (26) unlösbar verbunden ist.

7. Kraftstofffilter nach Anspruch 6, **dadurch gekennzeichnet, dass** das Feinmedium (26) aus einem thermoplastischen Material besteht und mit dem Stützkäfig (27) verschweißt ist.

8. Kraftstofffilter nach Anspruch 6, **dadurch gekennzeichnet, dass** der Stützkäfig (27) auf das Feinmedium (26) aufgespritzt ist.

9. Kraftstofffilter nach einem der vorangehenden Ansprüche, **dadurch gekennzeichnet, dass** das Gehäuse (11) über einen Topf (13) und einen Deckel (14) verfügt, wobei der Topf (13) über einen Dichtungshalter (15) mit dem Deckel (14) verbunden, insbesondere verbördelt, ist.

## Claims

1. Fuel filter, in particular for Diesel fuels, featuring a housing (11) and a filter medium (12) substantially impermeable for gases contained in the fuel, the housing (11) having at least an inlet (17) and an outlet (18), a dirty side (21) being formed between the inlet (17) and the filter medium (12) and a clean side (22) being formed between the outlet (18) and the filter medium (12), a bleeding device (25) being provided between the dirty side (21) and the clean side (22) which is capable of transporting gases from the dirty side (21) to the clean side (22), **characterized in that** an additional fine medium (26), through which gas pockets contained in the fuel can pass and which is capable of separating impurities contained at the clean side (22), is arranged between the outlet (18) and the bleeding device (25) such that it is flowed through by cleaned fuel and gas pockets which have passed through the bleeding device.

2. Fuel filter according to claim 1, **characterized in that** the bleeding device (25) has a coarse separator.

3. Fuel filter according to claim 1 or 2, **characterized in that** the bleeding device (25) is integrated in a filter medium holder (24).

4. Fuel filter according to one of the above claims, **characterized in that** the fine medium (26) is realized as sieve cloth.

5. Fuel filter according to one of the above claims, **characterized in that** the fine medium (26) is connected with a support cage (27), the support cage (27) being connectable with the housing (11).

6. Fuel filter according to claim 5, **characterized in that** the support cage (27) is made of thermoplastics and connected undetachably with the fine medium (26).

7. Fuel filter according to claim 6, **characterized in that** the fine medium (26) is made of thermoplastics and welded with the support cage (27).

8. Fuel filter according to claim 6, **characterized in that** the support cage (27) is injection molded onto the fine medium (26).

9. Fuel filter according to one of the above claims, **characterized in that** the housing (11) has a pot (13) and a cover (14), the pot (13) being connected, in particular flanged, with the cover (14) via a seal retainer (15).

## Revendications

1. Filtre à carburant, notamment pour les carburants diesel, présentant un boîtier (11) et un milieu filtrant (12) essentiellement imperméable aux gaz contenus dans le carburant, le boîtier (11) disposant au moins d'une entrée (17) et d'une sortie (18), un côté brut (21) étant formé entre l'entrée (17) et le milieu filtrant (12) et un côté pur (22) étant formé entre la sortie (18) et le milieu filtrant (12), un dispositif de purge (25) étant prévu entre le côté brut (21) et le côté pur (22), ce dispositif de purge étant adapté à transporter des gaz du côté brut (21) vers le côté pur (22), **caractérisé en ce qu'**un milieu fin (26) supplémentaire à travers lequel les bulles de gaz contenues dans le carburant peuvent passer et qui se prête à la séparation des impuretés contenues du côté pur (22) est placé entre la sortie (18) et le dispositif de purge (25), de telle manière qu'il soit traversé par le carburant purifié et par les bulles de gaz qui sont passées par le dispositif de purge.

2. Filtre à carburant selon la revendication 1, **caractérisé en ce que** le dispositif de purge (25) dispose d'un séparateur grossier.

3. Filtre à carburant selon la revendication 1 ou 2, **caractérisé en ce que** le dispositif de purge (25) est intégré dans un support de milieu filtrant.

4. Filtre à carburant selon l'une des revendications précédentes, **caractérisé en ce que** le milieu fin (26) est conçu comme toile de tamisage.

5. Filtre à carburant selon l'une des revendications précédentes, **caractérisé en ce que** le milieu fin (26) est relié à une cage-support (27), cette cage-support (27) pouvant être raccordée au boîtier (11).

6. Filtre à carburant selon la revendication 5, **caractérisé en ce que** la cage-support (27) est constituée d'une matière thermoplastique et est reliée de manière fixe au milieu fin (26).

7. Filtre à carburant selon la revendication 6, **caractérisé en ce que** le milieu fin (26) est constitué d'une matière thermoplastique et est scellé à la cage-support (27).

8. Filtre à carburant selon la revendication 6, **caractérisé en ce que** la cage-support (27) est injectée sur le milieu fin (26).

9. Filtre à carburant selon l'une des revendications précédentes, **caractérisé en ce que** le boîtier (11) est doté d'un pot (13) et d'un couvercle (14), le pot (13) étant relié, notamment serti, au couvercle (14) par un porte-joint (15).
